# EUROPEAN PATENT APPLICATION

(11) **EP 2 996 078 A1**
(43) Date of publication of application: **16.03.2016**
(21) Application number: 13883932.9
(22) Date of filing: 08.11.2013
(51) Int. Cl.: G06Q 20/06

(54) **CORPORATE CURRENCY MANAGEMENT DEVICE, CORPORATE CURRENCY MANAGEMENT METHOD, AND PROGRAM**

(30) Priority: 07.05.2013 JP 2013097505
(71) Applicant: Azuma, Yoshihiro, Tokyo 153-0043 (JP)
(72) Inventor: Azuma, Yoshihiro, Tokyo 153-0043 (JP)
(74) Representative: Ström & Gulliksson AB
(86) International application number: PCT/JP2013/080354
(87) International publication number: WO 2014/181487

(57) **Abstract**

The objective of the present invention is to enable the equivalent value for products and services to be paid by means of corporate currency in every country in the world. A variable setting unit (201) variably sets the correspondence relationship between a key currency and a corporate currency according to prescribed conditions. On the basis of the correspondence relationship variably set by the variable setting unit (201), and a conversion rate between the key currency and an exchange currency at an activity location identified by an activity location identification unit (212), a corporate currency conversion unit (221) converts an amount in the exchange currency at the activity location, as recognized by an equivalent value recognition unit (213), into an amount in the corporate currency. A corporate currency management unit (222) uses corporate currency associated with a card medium (C) to execute a process for debiting the equivalent value amount after conversion to the corporate currency. A billing processing unit (211) controls the execution of a billing process for the equivalent value amount of the product or service, using the exchange currency at the activity location or the key currency.

## Description

### TECHNICAL FIELD

The present invention relates to a proprietary-currency management device, a proprietary-currency management method, and a program.

### BACKGROUND ART

Conventionally, electronic money cards with which a proprietary currency, such as electronic money, is managed have been distributed, with the popularization of electronic commerce micro-transactions. Information on the proprietary currency is associated and stored in such electronic money cards, and holders of the electronic money cards can easily perform payment with the electronic money through an IC chip built in the electronic money cards. In order to popularize payments with such a proprietary currency, Patent Document 1 discloses providing a service using electronic money, by constructing an identical system affiliated by the headquarters of stores such as convenience stores in each country (for example, refer to Patent Document 1).

Patent Document 1: Japanese Unexamined Patent Application, Publication No. 2008-282368

### DISCLOSURE OF THE INVENTION

### Problems to be Solved by the Invention

However, with the conventional electronic money cards, the payment is settled in the exchange currency of the issuing country, whereas exchange currencies are different in countries other than the issuing country; therefore, it has been extremely difficult to use the conventional electronic money cards in multiple countries.

The present invention has been made in view of the forgoing; and an object of the present invention is to make it possible to pay a price for a product or service by using a proprietary currency, which is associated with the same storage medium, throughout the world.

### Means for Solving the Problems

In order to achieve the above mentioned object, the proprietary-currency management device according to one aspect of the present invention is characterized by including:
variable setting means configured to use an exchange currency of a predetermined basic region as a key currency, and to variably set a corresponding relationship between the key currency and a proprietary currency, based on a predetermined condition;
place-of-act identification means configured to identify a place, where a price for a product or service is paid in the proprietary currency with a storage medium that is previously associated with a predetermined amount, as a place of the act;
price recognition means configured to recognize an amount of the price for the product or service, at an amount in an exchange currency at the place of the act identified by the place-of-act identification means;
proprietary-currency conversion means configured to convert the amount recognized by the price recognition means, into an amount in the proprietary currency, based on the corresponding relationship which has been variably set by the variable setting means, and on a conversion rate between an exchange currency at the place of the act identified by the place-of-act identification means and the key currency;
proprietary-currency management means configured to execute management to subtract an amount of the price by using the proprietary currency associated with the storage medium; and
charging processing means configured to control execution of charging processing of the amount of the price of the product or service, using the exchange currency at the place of the act identified by the place-of-act identification means or the key currency.

In the proprietary-currency management device according to another aspect of the present invention,
the variable setting means can further variably set the predetermined condition for variably setting the corresponding relationship between the key currency and the proprietary currency, for each place that can be the place of the act.

In the proprietary-currency management device according to another aspect of the present invention,
the variable setting unit can further variably set the predetermined condition for variably setting the corresponding relationship between the key currency and the proprietary currency, for each business operator who issues the storage medium.

A proprietary-currency management method according to one aspect of the present invention is a proprietary-currency management method executed by a proprietary-currency management device that manages a proprietary currency, in which the method is characterized by including: a variable setting step of using an exchange currency of a predetermined basic region as a key currency, and variably setting a corresponding relationship between the key currency and the proprietary currency, based on a predetermined condition;
a place-of-act identification step of identifying a place, where a price for a product or service is paid in the proprietary currency with a storage medium that is previously associated with a predetermined amount, as a place of the act;
a price recognition step of recognizing an amount of the price for the product or service, at an amount in an exchange currency at the place of the act identified in the place-of-act identification step;
a proprietary-currency conversion step of converting the amount recognized by processing in the price recognition step, into an amount in the proprietary currency, based on the corresponding relationship which has been variably set by processing in the variable setting step, and on a conversion rate between an exchange currency at the place of the act identified by processing in the place-of-act identification step and the key currency;
a proprietary-currency management step of executing management to subtract an amount of the price by using the proprietary currency associated with the storage medium; and
charging processing step of controlling execution of charging processing of the amount of the price of the product or service, using the exchange currency at the place of the act identified by processing in the place-of-act identification step or the key currency.

A program according to one aspect of the present invention is a program for causing a computer that executes control of managing a proprietary currency to function as:
variable setting means configured to use an exchange currency of a predetermined basic region as a key currency, and to variably set a corresponding relationship between the key currency and a proprietary currency, based on a predetermined condition;
place-of-act identification means configured to identify a place, where a price for a product or service is paid in the proprietary currency with a storage medium that is previously associated with a predetermined amount, as a place of the act;
price recognition means configured to recognize an amount of the price for the product or service, at an amount in an exchange currency at the place of the act identified by the place-of-act identification means;
proprietary-currency conversion means configured to convert the amount recognized by the price recognition means, into an amount in the proprietary currency, based on the corresponding relationship which has been variably set by the variable setting means, and on a conversion rate between an exchange currency at the place of the act identified by the place-of-act identification means and the key currency;
proprietary-currency management means configured to execute management to subtract an amount of the price by using the proprietary currency associated with the storage medium; and
charging processing means configured to control execution of charging processing of the amount of the price of the product or service, using the exchange currency at the place of the act identified by the place-of-act identification means or the key currency.

### Effects of the Invention

The present invention makes it possible to pay a price for a product or service by using a proprietary currency, which is associated with the same storage medium, throughout the world.

### BRIEF DESCRIPTION OF THE DRAWINGS

Fig. 1 is a diagram illustrating the configuration of a proprietary-currency management system to which a proprietary-currency management device according to an embodiment of the present invention is applied;
Fig. 2 is a block diagram illustrating the hardware configuration of a proprietary-currency management device of an embodiment of the present invention;
Fig. 3 is a function block diagram illustrating functional configurations for executing proprietary-currency management processing, of the functional configurations of the proprietary-currency management device of Fig. 2;
Fig. 4 is a diagram showing a configuration of an exchange currency rate table, which is stored in a proprietary-currency rate storage unit of a storage unit of the proprietary-currency management device of Fig. 2;
Fig. 5 is a diagram showing a configuration of a proprietary-currency rate table, which is stored in the proprietary-currency rate storage unit of the storage unit of the proprietary-currency management device of Fig. 2; and
Fig. 6 is a flowchart describing a process of the proprietary-currency management processing executed by the proprietary-currency management device of Fig. 2 having the functional configuration of Fig. 3.

### PREFERRED MODE FOR CARRYING OUT THE INVENTION

Hereinafter, an embodiment of the present invention will be described with reference to the drawings.

### [Outline of Proprietary-currency Management System]

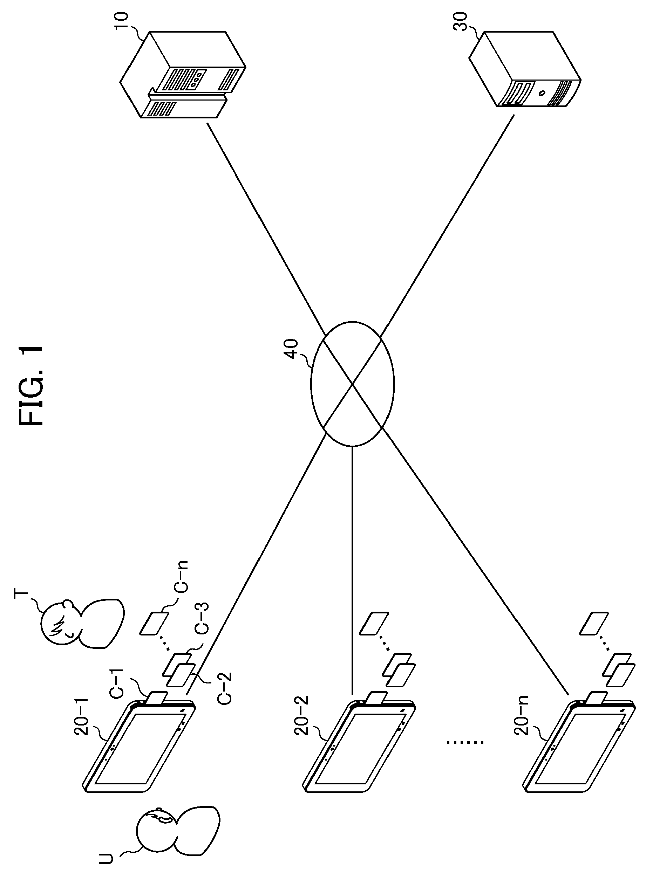

Fig. 1 illustrates a configuration of a proprietary-currency management system including a proprietary-currency management device according to an embodiment of the present invention.

The proprietary-currency management system 1 illustrated in Fig. 1 is configured such that a proprietary-currency management device 10, tablet terminals 20-1 to 20-m, and a charging server 30 are mutually connected through a network 40.

n card media C-1 to C-n (n is one or more arbitrary integer values) are issued by a business operator who provides a predetermined product or service. The card media C-1 to C-n are configured from an integrated circuit (IC) that can perform non-contact communication, and a magnetic card, and have a function of recording and calculating information (data). Hereinafter, the media are collectively called "card medium C" if there is no need to individually distinguish the card media C-1 to C-n.

A proprietary currency (point), which is available for paying the price for a product or service provided by the business operator, is associated with the card medium C. Here, "a proprietary currency is associated" does not mean that the proprietary currency is directly stored in the card medium C, but means that an available amount of the proprietary currency, using the card medium C, is managed by the proprietary-currency management device 10.

That is, the purpose of the card medium C is to use the proprietary currency for paying the price, etc. for a product or service provided by the business operator. However, the card medium C does not store the proprietary currency itself, but only stores an identifier (card number) or the like for uniquely identifying itself.

Each of the m tablet terminals 20-1 to 20-m (m is one or more arbitrary integer values) is owned by the business operator. Here, for convenience of description, in the example of Fig. 1, the business operator provides a taxi dispatching service. In this case, the m tablet terminals 20-1 to 20-m are respectively distributed to m drivers who belong to the business operator. Note that, hereinafter, these tablet terminals 20-1 to 20-m are collectively called "tablet terminal 20" if there is no need to individually distinguish these tablet terminals.

The tablet terminal 20 is configured as a computer that has a processing function as a computer main body, a touch panel and several buttons as an input device, a display as a display device, and a speaker, in a plate housing.

Although not illustrated, the tablet terminal 20 includes a reader/writer unit, a communication unit, and a global positioning system (GPS) unit.

The reader/writer unit functions as a reader/writer of the card medium C, and can read information stored in the card medium C and can write various types of information to the card medium C by performing contact or non-contact communication with the IC incorporated in the card medium C.

The communication unit can perform communication for transmission/reception of various types of information, using Wi-Fi, for example, with another device (mainly with the proprietary-currency management device 10 in the example of Fig. 1) through the network 40.

The GPS unit calculates data indicating the current position of the tablet terminal 20, to be specific, data of longitude, latitude, and altitude (hereinafter, the data is collectively called "positional information"), based on GPS signals, upon receipt of the GPS signals from a plurality of GPS satellites. The positional information identifies the position where a payment action using the card C is performed (hereinafter, the position is called "place of the act").

Note that a technique of identifying the place of the act is not especially limited to the identification technique with the positional information based on the GPS. The technique of identifying the place of the act by the type of an exchange currency used at the time of settlement (a technique of identifying Japan if yen is used, and identifying Korea if won is used) can be employed.

The proprietary-currency management device 10 is configured from a server or the like that is managed by an operator different from the business operator, and manages the proprietary currency associated with the card medium C.

For example, in the present embodiment, a predetermined amount of the proprietary currency is associated with (given to) each card medium C in advance. The holder of the card medium C (a passenger U of a taxi described below, for example) can pay for a service provided by the business operator, using the proprietary currency associated with the card medium C.

Note that the payment with the proprietary currency is subject to validation of the card medium C. That is, a card medium C that is not validated cannot be used for the payment with the proprietary currency, even if a predetermined amount of the proprietary currency is associated with the card medium C.

Therefore, the proprietary currency associated with the card medium C is not used if the card medium C is in the non-validated state, even if unauthorized use is intended by a third party. Therefore, with the safe distribution of the card medium C associated with the proprietary currency to an unspecified large number of people, the business operator can encourage the popularization of the card medium C associated with the proprietary currency, and advertising campaigns of a wide variety of business operators, can be easily realized using the card medium associated with the proprietary currency.

The proprietary-currency management device 10 manages such validation of each card medium C.

Furthermore, for example, the proprietary-currency management device 10 manages addition/subtraction of the amount of the validated proprietary currency for each card medium C.

To be specific, the proprietary-currency management device 10 uses the exchange currency of a predetermined basic region (the country that issues the card medium C, for example), as a key currency, and variably sets a corresponding relationship between the key currency and the proprietary currency, based on a predetermined condition. An exchange rate of the proprietary currency (point) into the key currency (hereinafter, called "proprietary-currency rate") can be employed as the corresponding relationship between the key currency and the proprietary-currency.

In the case where the place of the act is Korea, for example, the condition that the place of the act has a value of α (α is an arbitrary number of 0 or more), compared with a case where the place of the act is the basic region (Japan, for example) can be set as the predetermined condition. In this case, while the proprietary-currency rate of 1 point = 1 yen is set if the place of the act is Japan, for example, the proprietary rate of 1 point = 1 × α yen is set if the place of the act is Korea. Furthermore, the predetermined condition can be varied for each place of the act. Note that, more precisely, in a case where different types of exchange currencies are used at a predetermined place of the act, the predetermined condition can be varied for each type of the exchange currencies. Note that, for convenience of description hereinafter, a single currency is used at a single place of the act. That is, in a case where the place of the act is United State of America (U.S.A.), the condition that the place of the act has a value of β (β is an arbitrary value of 0 or more, which is different from α) can be set, compared with the case where the place of the act is the basic region (Japan, for example). In this case, while the proprietary-currency rate of 1 point = 1 yen is set if the place of the act is Japan, the proprietary rate of 1 point = 1 × β yen is set if the place of the act is U.S.A.

Furthermore, α and β can be variably set at arbitrary timing. For example, the proprietary-currency management device 10 can update the setting of α based on the exchange currency rate between yen and won (announced by some sort of public institution) at predetermined timing, such as at 9 o'clock every morning. Similarly, the proprietary-currency management device 10 can update the setting of β based on the exchange currency rate between yen and U.S. dollar (announced by some sort of public institution) at predetermined timing, such as at 9 o'clock every morning.

Alternatively, as the predetermined condition, the proprietary-currency management device 10 can set a different condition for each business operator who issues the card medium C, even if the place of the act is the same place. In this case, while the proprietary-currency rate of 1 point = 1 × γ yen is set when a company A is the payee, the proprietary-currency rate of 1 point = 1 × θ yen is set when a company B is the payee. Note that γ and θ are mutually different values, and are an arbitrary value of 0 or more.

The proprietary-currency management device 10 identifies the place of the act, and recognizes the amount of the price for a product or service paid with the card medium C, in the amount of the exchange currency at the place of the act. The proprietary-currency management device 10 converts the amount recognized in the exchange currency at the place of the act (the amount recognized in won if the place of the act is Korea, for example) of the amount of the price for a product or service paid with the card medium C into the amount of the proprietary currency (the number of points) based on the variably set proprietary-currency rate, and the exchange rate between the identified exchange currency at the place of the act and the key currency (1 won = 0.0834 yen, for example, if the place of the act is Korea).

The proprietary-currency management device 10 executes management to subtract the amount of the price for a product or service paid with the card medium C using the proprietary currency associated with the card medium C.

At that time when the proprietary-currency management device 10 has subtracted the amount of the proprietary currency for the payment with the card medium C, the proprietary-currency management device 10 requests the charging server 30 to perform processing of charging the amount of subtraction using the exchange currency at the place of the act or the key currency (hereinafter, the processing is called "charging processing").

The charging server 30 executes the charging processing based on the request from the proprietary-currency management device 10. That is, the charging server 30 charges the subtracted amount of the proprietary currency for the payment with the card medium C using the exchange currency at the place of the act or the key currency.

Note that an executable object of the charging processing by the charging server 30 is not only the card medium C, but also an arbitrary medium such as an existing electronic money or credit card. In other words, the tablet terminal 20 can receive payment for a service provided by the business operator, not only with the card medium C, but also with an arbitrary medium, such as the existing electronic money or credit card.

The outline of an operation of such a proprietary-currency management system is as follows.

That is, for example, a driver T of a taxi who belongs to the business operator presents the tablet terminal 20 to the passenger U who is a holder of the card medium C at the time of payment of a taxi fare.

The passenger U or the driver T swipes the card medium C through the tablet terminal 20.

Then, the series of processing below is executed, and the payment of the taxi fare is performed with the proprietary currency associated with the card medium C.

That is, the tablet terminal 20 reads the card number from the inserted card medium C, and transmits the read number to the proprietary-currency management device 10 through the network 40.

When the card number is received from the tablet terminal 20, the proprietary-currency management device 10 determines whether the card medium C corresponding to the card number is validated. After determined that the card medium C is validated, the proprietary-currency management device 10 recognizes the amount of the price for the taxi service (the amount the taxi fare), converts the amount of the price into the amount of the proprietary-currency using the proprietary-currency rate or the exchange currency rate, subtracts the converted amount of the price (the number of points) with regard to the proprietary-currency (point), and requests the charging server 30 to perform the charging processing using the exchange currency at the place of the act or the key currency.

The charging server 30 charges the price for the taxi fare using a predetermined exchange currency (the exchange currency at the place of the act or the key currency).

### [Configuration of Proprietary-currency Management Device 10]

Next, details of a configuration of the proprietary-currency management device 10 of the proprietary-currency management system of Fig. 1 will be described.

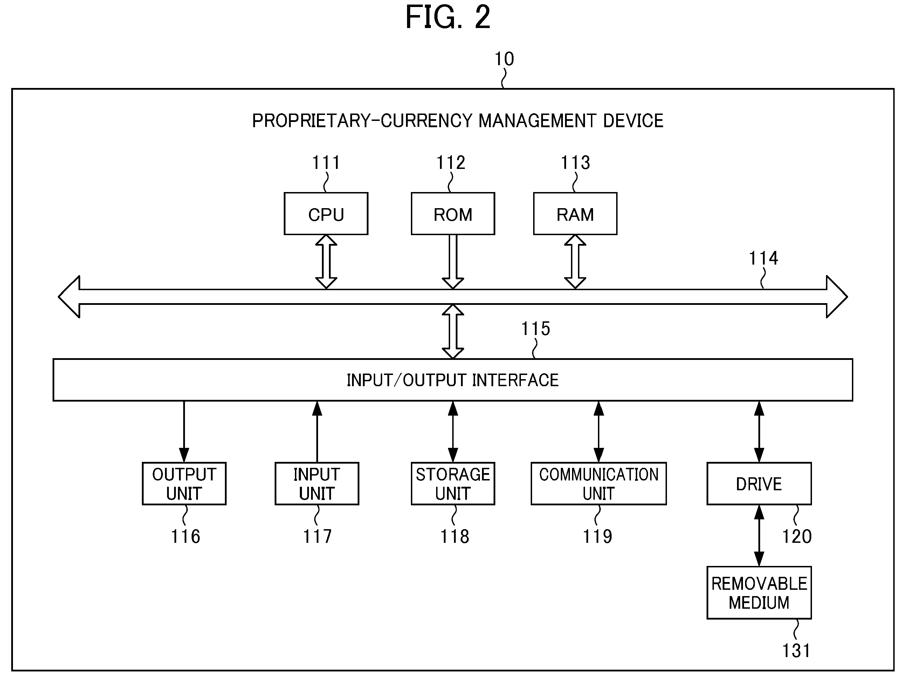

Fig. 2 is a block diagram illustrating a hardware configuration of a proprietary-currency management device of an embodiment of the present invention.

The proprietary-currency management device 10 includes a central processing unit (CPU) 111, a read only memory (ROM) 112, a random access memory (RAM) 113, a bus 114, an input/output interface 115, an output unit 116, an input unit 117, a storage unit 118, a communication unit 119, and a drive 120.

The CPU 111 executes various types of processing according to a program recorded in the ROM 112, or a program loaded from the storage unit 118 to the RAM 113.

Data and the like necessary for the CPU 111 to execute the various types of processing are also appropriately stored in the RAM 113.

The CPU 111, the ROM 112, and the RAM 113 are mutually connected through the bus 114. The input/output interface 115 is also connected with the bus 114. The output unit 116, the input unit 117, the storage unit 118, the communication unit 119, and the drive 120 are connected with the input/output interface 115.

The output unit 116 is configured from a display, a speaker, and the like, and outputs images and sounds.

The input unit 117 is configured from a keyboard, various buttons, and the like, and inputs various types of information according to an instruction operation of an operator.

The storage unit 118 is configured from a hard disk, a dynamic random access memory (DRAM), or the like, and stores various data.

The communication unit 119 controls communication performed with another device (the tablet terminal 20 or the charging server 30 in the example of Fig. 1) through the network 40 including the Internet.

A removable medium 131 is appropriately mounted to the drive 120, the removable medium 131 being made of a magnetic disk, an optical disk, a magneto-optical disk, a semiconductor memory, or the like. A program read by the drive 120 from the removable medium 131 is installed to the storage unit 118, as needed. Furthermore, the removable medium 131 can also store the various data stored in the storage unit 118, similarly to the storage unit 118.

The CPU 111 having such a configuration of the proprietary-currency management device 10 recognizes the price for a product or service paid with the card, by the amount of the exchange currency at the place of the act; converts the amount into an amount of the proprietary currency, based on the proprietary-currency rate, and the exchange currency rate between the place of the act and the key country, which have been variably set; subtracts the converted amount of the proprietary currency; and requests the charging server 30 to perform charging processing of the recognized amount with the exchange currency at the place of the act, or the key currency. Such a series of processing is hereinafter called "proprietary-currency management processing".

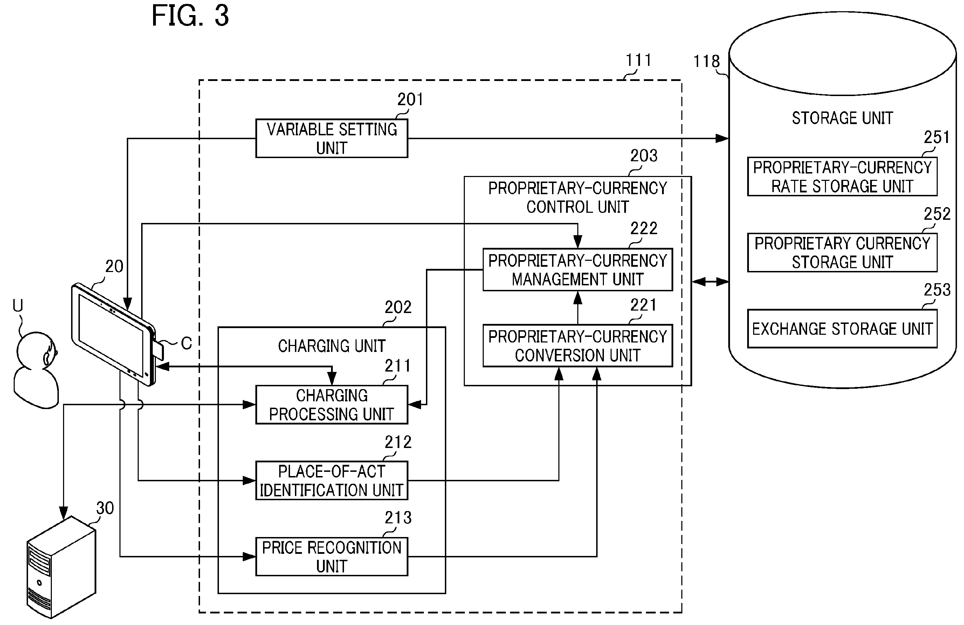

Fig. 3 is a function block diagram illustrating functional configurations for executing the proprietary-currency management processing, of the functional configurations of the proprietary-currency management device 10.

When the execution of the proprietary-currency management processing is controlled, a variable setting unit 201, a charging unit 202, and a proprietary-currency control unit 203 function in the CPU 111.

A proprietary-currency rate storage unit 251, a proprietary currency storage unit 252, and an exchange storage unit 253 are provided as one region of the storage unit 118.

The variable setting unit 201 variably sets a corresponding relationship (proprietary-currency rate) between the key currency and the proprietary currency, according to a predetermined condition. Here, as described above, the variable setting unit 201 can also variably set the predetermined condition, in accordance with an environment (difference in the place of the act, difference in the business operator as an issuer, etc.).

The charging unit 202 includes a charging processing unit 211, a place-of-act identification unit 212, and a price recognition unit 213.

When the price for a product or service is paid with the predetermined card medium C associated with the proprietary currency, the charging processing unit 211 requests the charging server 30 to execute the charging processing of the price.

The place-of-act identification unit 212 identifies a place, where the price for a product or service is paid in the proprietary currency with the card medium C, as the place of the act. Specifically, based on positional information of the tablet terminal 20, the place-of-act identification unit 212 identifies a position of the tablet terminal 20, upon being loaded with the card medium C, as a place of the act.

The price recognition unit 213 recognizes the price for the product or service paid with the card medium C, in the exchange currency at the place of the act identified by the place-of-act identification unit 212.

The proprietary-currency control unit 203 includes a proprietary-currency conversion unit 221 and a proprietary-currency management unit 222.

Based on the proprietary-currency rate, which has been variably set by the variable setting unit 201, and on the conversion rate of exchanging currency between the place of the act identified by the place-of-act identification unit 212 and the key place (hereinafter referred to as "exchange currency rate"), the proprietary-currency conversion unit 221 converts the amount recognized by the price recognition unit 213 (amount in the exchange currency at the place of the act), into an amount in the proprietary currency (the number of points).

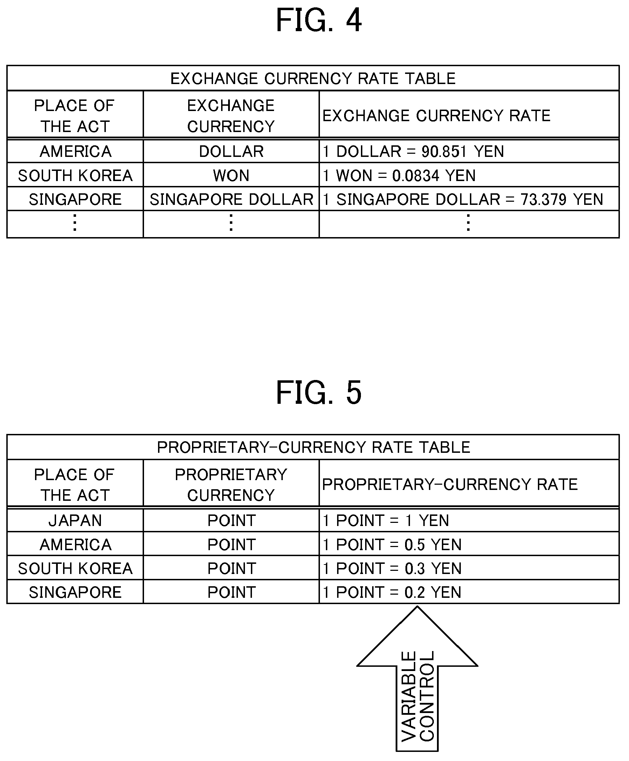

Specifically, the proprietary-currency conversion unit 221 converts the amount recognized by the price recognition unit 213 into an amount in the proprietary currency, based on an exchange currency rate table of Fig. 4, and a proprietary-currency rate table of Fig. 5, which are stored in the proprietary-currency rate storage unit 251.

Fig. 4 is a diagram showing an example of a configuration of the exchange currency rate table, which is stored in the proprietary-currency rate storage unit 251 of the storage unit 118 of the proprietary-currency management device 10 of Fig. 2.

The exchange currency rate table stores the exchange currency (type) and the exchange currency rate for each place of the act.

Fig. 5 is a diagram showing an example of a configuration of the proprietary-currency rate table, which is stored in the proprietary-currency rate storage unit 251 of the storage unit 118 of the proprietary-currency management device 10 of Fig. 2.

The proprietary-currency rate table stores the proprietary currency (type) and the proprietary-currency rate for each place of the act.

Referring back to Fig. 3, the proprietary-currency management unit 212 manages addition/subtraction of the proprietary currency, for each card medium C. More specifically, the proprietary-currency management unit 222 subtracts the converted amount of the price (a number of points of the price) from the amount of the proprietary currency associated with the card medium C (the remaining balance of the number of points), when the price for a product or service is paid with the card medium C. Specifically, the proprietary-currency management unit 222 subtracts the number of points converted by the proprietary-currency conversion unit 221, from the number of points (balance) stored in the proprietary currency storage unit 252 of the storage unit 118, and overwrites (updates) the proprietary currency storage unit 252 with the number of points after subtraction.

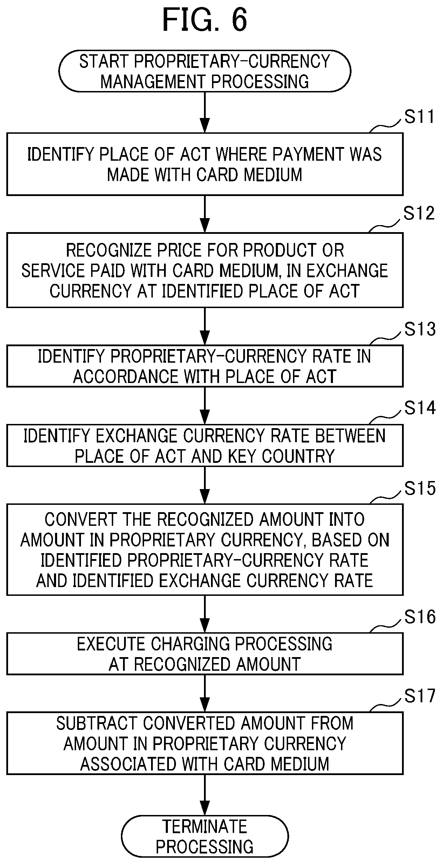

Next, the proprietary-currency management processing executed by the proprietary-currency management device 10 having the functional configurations of Fig. 3 will be described with reference to Fig. 6.

Fig. 6 is a flowchart describing the process of the proprietary-currency management processing executed by the proprietary-currency management device 10 of Fig. 2 having the functional configuration of Fig. 3.

The proprietary-currency management processing is started, upon swiping the card medium C through the tablet terminal 20 to complete the act of payment of a price for a product or service (taxi fare, etc.) provided by a business operator (taxi company, etc.) who owns the tablet terminal 20.

In Step S11, the place-of-act identification unit 212 identifies a place of the act, where a payment was made with the card medium C. Namely, when the positional information of the tablet terminal 20 is transmitted together with a card number, the place-of-act identification unit 212 recognizes that the card medium C corresponding to the card number is swiped through the tablet terminal 20 to complete the act of payment, and the place-of-act identification unit 212 identifies a position, which is indicated by the positional information of the tablet terminal 20, as the place of the act.

In Step S12, the price recognition unit 213 recognizes the price for the product or service paid with the card medium C, in the exchange currency at the place of the act identified in Step S11. Here, in a case where different types of exchange currencies are used at the identified place of the act, the amount is recognized in a predetermined type of exchange currency among the plurality of currencies.

In Step S13, the proprietary-currency conversion unit 221 identifies a proprietary-currency rate that corresponds to the place of the act identified in Step S11, by referring to the proprietary-currency rate table of Fig. 5. For example, in a case where the place of the act is identified as "America" in Step S11, the proprietary-currency conversion unit 221 identifies a proprietary-currency rate "1 point = 0.5 yen" which corresponds to America, by referring to the proprietary-currency rate table of Fig. 5.

In Step S14, the proprietary-currency conversion unit 221 identifies an exchange currency rate that corresponds to the place of the act identified in Step S11, by referring to the exchange currency rate table of Fig. 4. For example, in a case where the place of the act is identified as "America" in Step S11, the proprietary-currency conversion unit 221 identifies an exchange currency rate "1 dollar = 90.851 yen" that corresponds to America, by referring to the exchange currency rate table of Fig. 4.

In Step S15, the proprietary-currency conversion unit 221 converts the amount recognized in Step S12 into an amount in the proprietary currency, based on the proprietary-currency rate identified in Step S13, and on the exchange currency rate identified in Step S14.

Specifically, for example, in a case where the amount recognized in Step S12 is "100 dollars", the proprietary-currency conversion unit 221 calculates "100 dollars * 90.851 yen" to obtain 9085.1 yen, based on the exchange currency rate "1 dollar = 90.851 yen" identified in Step 14, The proprietary-currency conversion unit 221 calculates "9085.1 yen * 0.5 points/yen" to obtain 4542.55 points being the amount in the proprietary currency (the converted number of points), based on the proprietary-currency rate "1 point = 0.5 yen" identified in Step 13.

In Step S16, the charging processing unit 211 requests the charging server 30 to execute the charging processing at the amount recognized in Step S12.

In Step S17, the proprietary-currency management unit 222 subtracts the amount converted in Step S15 (the amount of the price after converting the points) from the amount in the proprietary currency associated with the card medium C (the remaining balance of the number of points). The proprietary-currency management unit 222 stores the amount in the proprietary currency after subtraction in association with the card medium C (the value after updating the remaining balance of the number of points) into the proprietary currency storage unit 252.

When this processing is terminated, the proprietary-currency management processing is terminated.

As described above, the proprietary-currency management device 10 of the present embodiment includes the variable setting unit 201, the place-of-act identification unit 212, the price recognition unit 213, the proprietary-currency conversion unit 221, and the proprietary-currency management unit 222.

The variable setting unit 201 uses the exchange currency of a predetermined basic region as a key currency, and variably sets a corresponding relationship between the key currency and the proprietary currency (the proprietary-currency rate, in the example above), based on a predetermined condition.

The place-of-act identification unit 212 identifies a place, where the price for a product or service is paid in the proprietary currency with the card medium C that is previously associated with a predetermined amount in the proprietary currency, as the place of the act.

The price recognition unit 213 recognizes the amount of the price for the product or service in the exchange currency at the place of the act identified by the place-of-act identification unit 212.

Based on the corresponding relationship (the proprietary-currency rate, in the example above), which has been variably set by the variable setting unit 201, and on the conversion rate between the exchange currency at the place of the act identified by the place-of-act identification unit 212 and the key currency (i.e. the exchange currency rate), the proprietary-currency conversion unit 221 converts the amount recognized by the price recognition unit 213 (amount in the exchange currency at the place of the act), into the amount in the proprietary currency (the number of points, in the example above).

The proprietary-currency management unit 222 executes management of subtracting the amount of the price converted into the proprietary currency (the converted number of points) by using the proprietary currency associated with the card medium C.

The charging processing unit 211 controls the execution of the charging processing of the amount of the price of a product or service, using the exchange currency or the key currency at the place of the act.

As a result, even if the card medium C associated with the proprietary currency is used for a payment in a region (for example, South Korea or America) other than the basic region (for example, Japan), a payment can be made by using the proprietary currency in the same way as in the basic region, regardless of difference in exchange currency. This makes it possible to make an easy and flexible payment for the price of a product or service in a proprietary currency throughout the world. Namely, this makes it possible to use the card medium C throughout the world, based on mutual cooperation between the issuer of the card medium C (business operator) and the user.

Further, the variable setting unit 201 can variably set a predetermined condition for variably setting a corresponding relationship between the key currency and the proprietary currency (the proprietary-currency rate, in the example above), for each place that can be a place of the act (refer to Fig. 5) .

The variable setting unit 201 can also variably set a predetermined condition for variably setting a corresponding relationship between the key currency and the proprietary currency (the proprietary-currency rate, in the example above), for each business operator who issues the card medium C.

As a result, the issuer of the card medium C (business operator) can reduce the risk of having the remaining proprietary currency (points) unconsumed. Also, the issuer can flexibly set a prime cost and a selling price of a product or service, without being dependent on the exchange currency rate.

Note that the present invention is not limited to the above-described embodiment, and modifications, improvements, and the like within the scope where the objective of the present invention can be achieved are included in the present invention.

For example, in the above-mentioned embodiment, the proprietary-currency rate is employed as the corresponding relationship between the key currency and the proprietary currency; however, the present invention is not limited thereto in particular, as long as mutual conversion between the key currency and the proprietary currency is possible.

Also, in the above-mentioned embodiment, the predetermined condition for variably setting a corresponding relationship between the key currency and the proprietary currency (the proprietary-currency rate, in the example above) is set in accordance with the environment (difference in the place of the act, or difference in the issuer of the card medium C (business operator)); however, the present invention is not limited thereto.

For example, in the above-mentioned embodiment, an amount in an exchange currency at a place of the act is recognized as an amount of a price, by the price recognition unit 213; however, the present invention is not limited thereto, and an amount in a proprietary currency (number of points) may be recognized as an amount of a price.

In this case, a series of processing as follows is executed.

Namely, the issuer of the card medium C (business operator) can set the selective use of "exchange currency rate" or "proprietary-currency rate" for the proprietary currency (points).

In this instance, in the case of setting the "exchange rate" to be used, the exchange currency of the issuing country (basic region) is the key currency or basic currency. Therefore, when the card medium C is used, the amount of the proprietary currency (points) is converted by using the conversion rate (exchange conversion rate) for the exchange currency at the place of the act, in relation to the key currency.

This makes it possible to use the card medium C throughout the world, based on mutual cooperation between the issuer of the card medium C and the user.

On the other hand, in the case of setting the "proprietary-currency rate" to be used, the issuer of the card medium C (business operator) can flexibly set the proprietary currency conversion rate for the member stores (tablet terminal 20), in relation to the proprietary currency (points). The term "flexibly" means that the set value is modifiable in terms of specification. When the card medium C is used, the amount of the proprietary currency (number of points) is converted by using the proprietary-currency rate per unit of proprietary currency (1 point) at the member store (tablet terminal 20).

As a specific example, in the case of employing points as a proprietary currency, it is assumed that the points issued in Japan are used at member stores in South Korea (the tablet terminals 20 in South Korea).

As a prerequisite for this case, it is assumed that 1,000 points (corresponding to 1,000 yen) have been issued in Japan, and are converted into 11,689 points (corresponding to 11,689 won) according to the conversion rate (exchange currency rate) between the key currency (yen) and the exchange currency at the place of the act (won). It is assumed that the issuer has set the proprietary-currency rate for the member stores in South Korea (tablet terminals 20 in South Korea) to the exchange currency rate of 0.8. However, it is assumed that the set value of the proprietary-currency rate is modifiable in terms of specification, in which, for example, the rate and the rounding up or down are modifiable in terms of specification. It is assumed that 1,000 points, which have been issued in Japan, are used at a member store in South Korean (tablet terminal 20 in South Korea). In this case, the remaining balance of the points associated with the card medium C will become 0 points, in which 11,689 won will be charged in the case of the "exchange rate" having been set to be used, which is however decreased by 0.8 times to 9,351 won to be charged in the case of the "proprietary-currency rate" having been set to be used.

In this manner, by setting the "proprietary-currency rate" to be used, the following effects (1) to (3) can be achieved, similarly to the case of the above-mentioned embodiment.
(1) Utilization becomes possible throughout the world, based on mutual cooperation between the issuer and the user.
(2) The issuer can reduce the risk of having the remaining points unconsumed.
(3) The issuer can flexibly set a prime cost and a selling price, without depending on the exchange currency rate.

Furthermore, the medium associated with the proprietary currency is the card medium C in the above-described embodiment. However, the medium is not limited to the card medium C, and any storage medium can be employed as long as the storage medium can be associated with the proprietary currency. Note that, as described above, the storage medium does not store the proprietary currency itself, and it is sufficient if the storage medium stores information that can identify the storage medium (the card number in the above-described example).

In other words, the present invention is applicable to a storage medium that can identify or recognize an individual person, to be specific, with a magnetic card, an IC card, a mobile information terminal, a USB memory, or the like, by associating the proprietary currency with the storage medium.

Furthermore, in the above-described embodiment, a server has been exemplarily described as the proprietary-currency management device 10 to which the present invention is applied. However, the proprietary-currency management device 10 is not limited to this example.

For example, the present invention can be applied to typical electronic devices. To be specific, the present invention can be applied to a notebook type personal computer, a television receiver, a video camera, a mobile navigation device, a mobile telephone, a portable game device, and the like.

The above-described series of processing can be executed by hardware, or by software.

In other words, the functional configuration of Fig. 3 is merely exemplarily illustrated, and is not especially limited. That is, it is sufficient if a function to execute the entire series of processing is included in the proprietary-currency management device 10, and what kind of function blocks is used to realize the function is not especially limited to the example of Fig. 3.

Furthermore, one function block may be configured from hardware alone, software alone, or a combination of the hardware and the software.

When the series of processing is executed by software, a program that configures the software is installed onto a computer or the like from the network or a recording medium.

The computer may be a computer incorporated in dedicated hardware. Furthermore, the computer may be a computer that can execute various functions, by having various programs installed.

The recording medium that includes such a program is configured from not only the removable medium 131 of Fig. 2, which is distributed separately from the device main body, in order to provide the program to the user, but also a recording medium or the like provided to the user in a state of being incorporated in the device main body in advance. The removable medium 131 is configured from, for example, a magnetic disk (including a floppy disk), a Blu-ray disc (registered trademark), an optical disk, or a magneto-optical disk. The optical disk is configured from a compact disk-read only memory (CD-ROM), a digital versatile disk (DVD), or the like. The magneto-optical disk is configured from a mini disk (MD), or the like. Furthermore, the recording medium provided to the user in a state of being incorporated in the device main body in advance is configured from the ROM 112 of Fig. 2, a hard disk included in the storage unit 118 of Fig. 2, or the like.

Note that, in the present specification, the steps that describe the program recorded in the recording medium include not only processing performed in consecutively in time, but also processing executed in parallel or in a separate manner, even if the processing is not necessarily performed in a time series.

Furthermore, in the present specification, the terms of the system mean a general device configured from a plurality of devices, a plurality of means, or the like.

### EXPLANATION OF REFERENCE NUMERALS

- 111: CPU;
- 112: ROM;
- 113: RAM;
- 114: bus;
- 115: input/output interface;
- 116: output part;
- 117: input unit;
- 118: storage unit;
- 119: communication unit;
- 120: drive;
- 131: removable medium;
- 201: variable setting unit;
- 202: charging unit;
- 203: proprietary-currency control unit;
- 211: charging processing unit;
- 212: place-of-act identification unit;
- 213: price recognition unit;
- 221: proprietary-currency conversion unit;
- 222: proprietary-currency management unit;
- 251: proprietary-currency rate storage unit;
- 251, 252: proprietary currency storage unit; and
- 253: exchange storage unit.

## Claims

1. A proprietary-currency management device comprising:
variable setting means configured to use an exchange currency of a predetermined basic region as a key currency, and to variably set a corresponding relationship between the key currency and a proprietary currency, based on a predetermined condition;
place-of-act identification means configured to identify a place, where a price for a product or service is paid with a storage medium that is previously associated with a predetermined amount in the proprietary currency, as a place of the act;
price recognition means configured to recognize an amount of the price for the product or service, at an amount in an exchange currency at the place of the act identified by the place-of-act identification means;
proprietary-currency conversion means configured to convert the amount recognized by the price recognition means, into an amount in the proprietary currency, based on the corresponding relationship which has been variably set by the variable setting means, and on a conversion rate between an exchange currency at the place of the act identified by the place-of-act identification means and the key currency;
proprietary-currency management means configured to execute management to subtract an amount of the price by using the proprietary currency associated with the storage medium; and
charging processing means configured to control execution of charging processing of the amount of the price of the product or service, using the exchange currency at the place of the act identified by the place-of-act identification means or the key currency.

2. The proprietary-currency management device according to claim 1,
wherein the variable setting means further variably sets the predetermined condition for variably setting the corresponding relationship between the key currency and the proprietary currency, for each place that can be the place of the act.

3. The proprietary-currency management device according to claim 1,
wherein the variable setting unit further variably sets the predetermined condition for variably setting the corresponding relationship between the key currency and the proprietary currency, for each business operator who issues the storage medium.

4. A proprietary-currency management method executed by a proprietary-currency management device that manages a proprietary currency, the method comprising:
a variable setting step of using an exchange currency of a predetermined basic region as a key currency, and variably setting a corresponding relationship between the key currency and the proprietary currency, based on a predetermined condition;
a place-of-act identification step of identifying a place, where a price for a product or service is paid in the proprietary currency with a storage medium that is previously associated with a predetermined amount, as a place of the act;
a price recognition step of recognizing an amount of the price for the product or service, at an amount in an exchange currency at the place of the act identified in the place-of-act identification step;
a proprietary-currency conversion step of converting the amount recognized by processing in the price recognition step, into an amount in the proprietary currency, based on the corresponding relationship which has been variably set by processing in the variable setting step, and on a conversion rate between an exchange currency at the place of the act identified by processing in the place-of-act identification step and the key currency;
a proprietary-currency management step of executing management to subtract an amount of the price by using the proprietary currency associated with the storage medium; and
charging processing step of controlling execution of charging processing of the amount of the price of the product or service, using the exchange currency at the place of the act identified by processing in the place-of-act identification step or the key currency.

5. A program for causing a computer that executes control of managing a proprietary currency to function as:
variable setting means configured to use an exchange currency of a predetermined basic region as a key currency, and to variably set a corresponding relationship between the key currency and a proprietary currency, based on a predetermined condition;
place-of-act identification means configured to identify a place, where a price for a product or service is paid with a storage medium that is previously associated with a predetermined amount in the proprietary currency, as a place of the act;
price recognition means configured to recognize an amount of the price for the product or service, at an amount in an exchange currency at the place of the act identified by the place-of-act identification means;
proprietary-currency conversion means configured to convert the amount recognized by the price recognition means, into an amount in the proprietary currency, based on the corresponding relationship which has been variably set by the variable setting means, and on a conversion rate between an exchange currency at the place of the act identified by the place-of-act identification means and the key currency;
proprietary-currency management means configured to execute management to subtract an amount of the price by using the proprietary currency associated with the storage medium; and
charging processing means configured to control execution of charging processing of the amount of the price of the product or service, using the exchange currency at the place of the act identified by the place-of-act identification means or the key currency.
